# EUROPEAN PATENT APPLICATION

(11) **EP 3 767 791 A1**
(43) Date of publication of application: **20.01.2021**
(21) Application number: 19187307.4
(22) Date of filing: 19.07.2019
(51) Int. Cl.: H02K 1/24, H02K 13/00, H02K 13/02, H01R 39/08

(54) **ELECTRIC GENERATOR**

(71) Applicant: Mahle International GmbH, 70376 Stuttgart (DE)
(72) Inventor: BERCE, Mitja, 5270 Ajdovscina (SI); TUREL, Ales, 5290 Sempeter pri Gorici (SI)
(74) Representative: BRP Renaud & Partner mbB Rechtsanwälte Patentanwälte Steuerberater

(57) **Abstract**

The invention relates to an electric generator (1), in particular an alternator for a motor vehicle. The electric generator (1) has a rotor (2) and a stator (3), having at least two claw poles (4, 5), which are fixed on the shaft (6) and have a plurality of claw pole teeth (4a, 5a). The claw pole teeth (4a, 5a) form an outer circumference (7) of the rotor (2). Arranged between the claw poles (4, 5) there is at least one excitation coil (8) for generating a magnetic field that alternates on the claw pole teeth (4a, 5a) on the outer circumference (7) of the rotor (2). A slipring arrangement (11) has a sheathing region (17), which sheaths the shaft (6) and extends axially, at least in regions. The slipring arrangement (11) has two sliprings (12a, 12b), which are arranged, at a distance from the rotor (2), on the sheathing region (17) and go around the shaft (6). The slipring arrangement (11) additionally has two electrical conductors (14a, 14b), which are sheathed, at least in regions, by the sheathing region (17) and via which the sliprings (12a, 12b) are electrically contacted to the excitation coil (8).. According to the invention, the slipring arrangement (11) has at least one protective ring projection (19) and a rotor bearing (10a) is fixed in a form-fitting or in a press-fitting on the protective ring projection (19) of the slipring arrangement (11).

## Description

The invention relates to an electric generator, in particular an alternator for a motor vehicle, according to the preamble of Claim 1.

An electric generator is used to generate a single-phase or multiphase alternating current, and has a stator, and a rotor accommodated internally by the stator. The rotor in this case has two claw poles, which are fixed on the shaft in a rotationally fixed manner. The claw poles have a plurality of claw pole teeth, which form an outer circumference of the rotor and alternate on the outer circumference of the rotor. By means of an excitation current, an excitation coil generates a magnetic field around the claw poles, the poles of the magnetic field corresponding respectively to a claw pole, and alternating on the outer circumference because of the alternating claw pole teeth. Thus, when the rotor is put into rotation, an alternating current is generated in coils of the stator.

In order to conduct the excitation current to the excitation coil, the electric generator usually has two sliprings. The sliprings in this case are arranged on the shaft, and can also pick up the excitation current from static components as the shaft rotates. The sliprings are electrically contacted to the excitation coil by a respective axially extending conductor in a sheathing, the conductor usually being arranged in a respective axial recess in the shaft. Produced in this case, between the sheathing of the respective conductor and the respective axial recess in the shaft, there are gaps, extending axially on both sides and directed radially outwards, which serve, in particular, to compensate tolerances of the sheathing when the sliprings and the rotor bearing are fixed in a form-fitting manner on the shaft. Disadvantageously, dust and water from the rotor can penetrate, through the respective gaps, to the sliprings, and the electric generator can be damaged as a result. In order to avoid this, the shaft is sealed with silicone or with a coating, or also with flat seals. Alternatively, the slipring arrangement can have an axially sheathing region, as described in DE 10 2012 201 644 A1. All of these solutions, however, are elaborate, insufficient or comparatively expensive.

It is therefore the object of the invention to specify, for the electric generator of the generic type, an improved or at least alternative embodiment, with which the described disadvantages are overcome.

This object is achieved according to the invention by the subject-matter of the independent Claim 1. Advantageous embodiments are subject-matter of the dependent claims.

The present invention is based on the general concept of avoiding a gap in a shaft of an electric generator, and thereby also preventing dust and water from entering the shaft axially and radially. The electric generator, in particular an alternator in a motor vehicle, in this case has a rotor and a stator. The rotor has at least two claw poles, which are fixed on the shaft and have a plurality of claw pole teeth. The claw pole teeth in this case form an outer circumference of the rotor. Arranged between the claw poles there is at least one excitation coil, for generating a magnetic field, which alternates on the claw pole teeth on the outer circumference of the rotor. A slipring arrangement has a sheathing region, which sheaths the shaft in a form-fitting or in a press-fitting manner and extends axially, at least in regions. The slipring arrangement has two sliprings, which are arranged, at a distance from the rotor, on the sheathing region and go around the shaft. In this way, the sliprings are separated from the shaft by the sheathing region. The slipring arrangement additionally has two electrical conductors, which are sheathed, at least in regions, by the sheathing region and via which the sliprings are electrically contacted to the excitation coil. According to the invention, the slipring arrangement has at least one protective ring projection, which is realized integrally on the sheathing region and which goes around the shaft adjacently to the rotor. Furthermore, a rotor bearing is fixed in a form-fitting or in a press-fitting manner on the protective ring projection, at least in regions.

The sheathing region extends continuously around the shaft and sheaths the latter completely. In addition, in the sheathing region, the electrical conductors are surrounded by the material of the slipring arrangement, such that, in the sheathing region, no axially extending and radially outwardly directed gap is produced between the slipring arrangement and the shaft. The sheathing region can be arranged on the shaft, between the rotor and the sliprings, in order to prevent dust and water from penetrating into the shaft and to the sliprings. According to the invention, the slipring arrangement has at least one integrally realized protective ring projection, which goes around the shaft adjacently to the rotor. The protective ring projection extends radially outwards, and prevents dust and water from penetrating to the sliprings. Advantageously, it may be provided that the rotor bearing is fixed in a form-fitting or in a press-fitting manner on the protective ring projection, at least in regions. The rotor bearing fixes the slipring arrangement on the shaft. A gap between the shaft, the slipring arrangement and the rotor bearing is thereby minimized. Furthermore, the protective ring projection closes the gap between the sheathing region and the rotor bearing and no further sheathings are needed. In this advantageous manner, dust and water are prevented from penetrating to the sliprings, and the electric generator is better protected.

It may be provided, advantageously, that the protective ring projection has a larger outer diameter than an arrangement of the sheathed electrical conductors under the rotor bearing. In addition, the rotor bearing can be pressed on the protective ring projection, at least in regions. On this way, the slipring is protected and dust and water are prevented from penetrating to the sliprings.

It may advantageously be provided that, in the sheathing region, the slipring arrangement sheaths the shaft in a form-fitting or in a press-fitting manner. The sheathing region consequently bears against the shaft in a form-fitting or in a press-fitting manner, such that there can also be no axially extending gap, surrounding the shaft, produced between the shaft and the slipring arrangement. In addition, the slipring arrangement can thereby be fixed on the shaft, without the need for further fastening means.

In the case of an advantageous development of the electric generator according to the invention, it may be provided that the sheathing region transitions into a radially extending end protection region, which encompasses a shaft end of the shaft arranged opposite to the rotor. By means of the end protection region, it can be ensured that, even following penetration into the shaft, dust and water cannot emerge at the shaft end, and as a result the sliprings of the slipring arrangement, and other components of the electric generator, can be protected. Advantageously, the end protection region may encompass the shaft end in a form-fitting manner. In particular, the quantity of dust and water between the shaft and the slipring arrangement can thereby be reduced in the end protection region, and corrosion of the shaft and slipring arrangement prevented as a result. Advantageously, the end protection region can have an axial opening or the shaft can be a hollow shaft. On this way, by mounting of the slipring arrangement on the shaft the air between the slipring arrangement and the shaft can escape.

It may be provided, advantageously, that the sheathing region and/or the at least one protective ring projection of the slipring arrangement are composed of an electrically insulating material, especially a plastic material. Advantageously, the respective electrical conductors may be insulated from the shaft by the electrically insulating material. As a result, there is also no need for any further insulating means, and the slipring arrangement can be produced inexpensively. In order for the respective electrical conductors to be electrically contacted to the sliprings, the sliprings may be fixed in a form-fitting or in a press-fitting manner on the sheathing region of the slipring arrangement. The respective slipring is arranged on the sheathing region and go around the shaft. The respective slipring is separated from the shaft via the sheathing region. In this case, an outer diameter of the sheathing region at the respective slipring corresponds to an inner diameter of the respective slipring. To simplify the positioning of the sliprings, it may be additionally provided that the outer diameter of the sheathing region at the one slipring differs from the outer diameter of the sheathing region at the other slipsring. Thus, the respective slipsrings can be mounted on the sheathing region one after another.

It may be provided, advantageously, that the respective electrical conductor extends along the shaft from the respective slipring to the claw poles. Thus, the respective electrical conductor can extend within the sheathing region and perhaps within the at least one protective ring projection. At the claw poles, the respective electrical conductor projects radially from the shaft and forms each an electrical contact element for the excitation coil. In this way, the excitation coil is electrically connected to the electrical contact element and via the respective electrical conductor to the respective slipring. At the claw poles, the sheathing region can project radially from the shaft with an axial distance to the electrical contact element and can form an insulating collar between the claw poles and the electrical contact elements.

In the case of an advantageous development of the electric generator, it may be provided that form-fitting or press-fitting elements are formed on the shaft and/or on the inner surface of the sheathing region. The slipring arrangement is then fixed to the shaft in a form-fitting or in a press-fitting manner in the sheathing region.

Overall, in the electric generator according to the invention, dust and water can advantageously be prevented from penetrating to the sliprings. The sliprings and the entire slipring arrangement are better protected against dust and water, and the electric generator can also be operated safely in difficult environments. In particular, with the solution according to the invention, the production costs and the amount of production work can be reduced considerably.

Further important features and advantages of the invention are given by the dependent claims, the drawings, and the associated description of the figures, on the basis of the drawings.

It is understood that the aforementioned features and those yet to be explained in the following may be applied, not only in the respectively stated combination, but also in other combinations or singly, without departure from the scope of the present invention.

Preferred exemplary embodiments of the invention are represented in the drawings and are explained in greater detail in the description that follows, wherein reference that are the same relate to components that are the same or similar or functionally alike.

There are shown, schematically in each case
- Fig. 1: a view of an electric generator according to the invention;
- Fig. 2: a detail of an electric generator according to the invention, in section;
- Fig. 3: a sectional view of a slipring arrangement in an electric generator according to the invention;
- Fig. 4: a view of a slipring arrangement in an electric generator according to the invention;
- Fig. 5: a view of a slipring arrangement with a rotor bearing fixed on a protective ring projection.

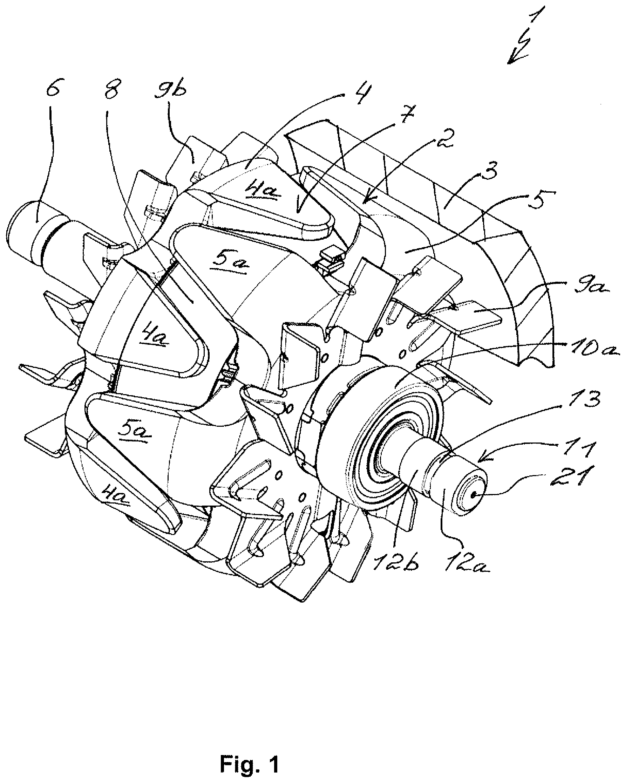

Fig. 1 shows a view of an electric generator 1 according to the invention. The electric generator 1 - in this exemplary embodiment an alternator - has a rotor 2 and a stator 3, which here is shown only schematically. The rotor 2 has two claw poles 4 and 5, which are fixed on a shaft 6 of the rotor 2 and have a plurality of claw pole teeth 4a and 5a. The claw pole teeth 4a and 5a in this case form an outer circumference 7 of the rotor 2. Arranged between the claw poles 4 and 5 there is at least one excitation coil 8, which, upon application of an excitation current, generates a magnetic field on the outer circumference 7 of the rotor 2. The claw poles 4 and 5 in this case correspond respectively to a pole of the magnetic field, such that the poles of the magnetic field alternate, correspondingly with the claw pole teeth 4a and 5a, on the outer circumference 7 of the rotor 2. Upon a rotation of the rotor 2 with the shaft 6, an alternating current is generated in coils of the stator 3, and is picked up. In addition, there are fan impellers 9a and 9b, for cooling the electric generator 1, fixed on the shaft 6 on both sides. The rotor 2, with the shaft 6, in this case is mounted by means of rotor bearings 10a and 10b - not visible here - in a rotatable manner in the stator 3.

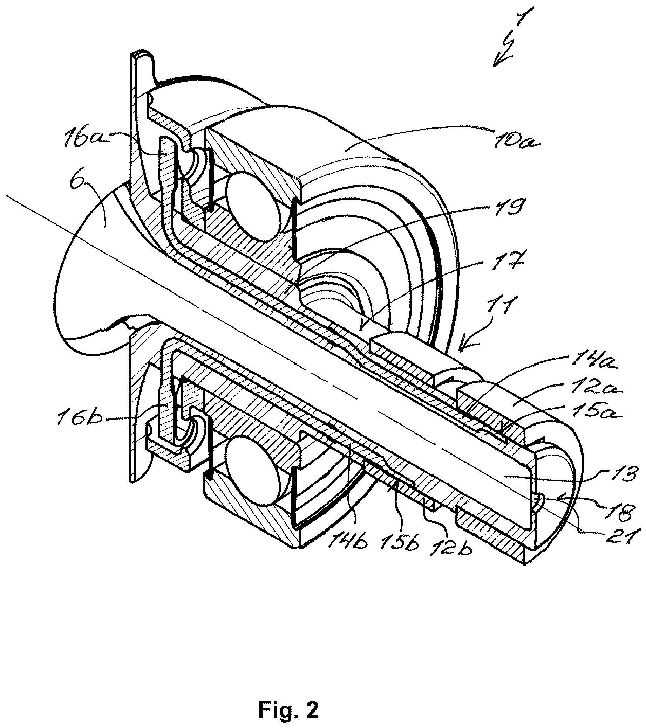

To enable the excitation current to be applied to the excitation coil 8, the electric generator 1 additionally has a slipring arrangement 11. The slipring arrangement 11 has two sliprings 12a and 12b, which are arranged, at a distance from the rotor 2, at a shaft end 13 of the shaft 6 and go around the shaft 6. A detailed structure of the slipring arrangement 11 in the electric generator 1 according to the invention is shown in Fig. 2.

Fig. 2 shows a detail of the electric generator 1 according to the invention in section. Here, the slipring arrangement 11 has two electrical conductors 14a and 14b, which in regions are sheathed in the slipring arrangement 11. The electrical conductors 14a and 14b bear against the sliprings 12a and 12b at contacting points 15a and 15b, such that the excitation current can be conducted from the sliprings 12a and 12b, via the electrical conductors 14a and 14b, to electrical contact elements 16a and 16b. Via the electrical contact elements 16a and 16b, the excitation coil 8 - not shown here - can be electrically contacted outwardly, via the slipring arrangement 11.

The slipring arrangement 11 additionally has a sheathing region 17, which sheaths the shaft 6 in a form-fitting or in a press-fitting manner and extends axially. In the sheathing region 17, the electrical conductors 14a and 14b are encompassed by the material of sheathing region 17and, in the sheathing region 17 there is no axially extending, radially outwardly directed gap produced between the slipring arrangement 11 and the shaft 6. A gap between the shaft 6 and the slipring arrangement 11 is avoided because of the form-fit or press-fit. In this advantageous manner, dust and water can be prevented from penetrating from the rotor 2 - not shown here - to the sliprings 12a and 12b fixed in a form-fitting or in a press-fitting manner on the sheathing region 17. In addition, the slipring arrangement 11 is fixed on the shaft 6 in a form-fitting or in a press-fitting manner, and there is no need for further fastening means, with the result, advantageously, of reducing the amount of work and the costs in the production of the electric generator 1.

The sheathing region 17 of the slipring arrangement 11 additionally transitions into a radially extending end protection region 18, which encompasses the shaft end 13 of the shaft 6 in a form-fitting manner. By means of the cap-type end protection region 18, it can be ensured that dust and water cannot emerge at the shaft end 13, and as a result the sliprings 12a and 12b of the slipring arrangement 11, and other components of the electric generator 1, can be protected. The extending end protection region 18 has an axial opening 21 and air between the slipring arrangement 11 and the shaft 6 can escape by mounting of the slipring arrangement 11 on the shaft 6.

According to the invention, the slipring arrangement 11 has a protective ring projection 19, which is realized integrally in the sheathing region 17 and which goes around the shaft 6, adjacently to the rotor 2. The protective ring projection 19 extends radially outwards, and prevents dust and water from penetrating to the sliprings 12a and 12b. Furthermore, the protective ring projection 19 closes the gap between the sheathing region 17 an the rotor bearing 10a, and, in comparison with a conventional electric generator, there is no axially extending, radially outwardly directed gap produced between the slipring arrangement 11 and the rotor bearing 10a. The rotor bearing 10a is fixed in a form-fitting or in a press-fitting manner in regions on the protective ring projection 19, and presses the slipring arrangement 11 against the shaft 6. As a result, a gap between the shaft 6, the slipring arrangement 11 and the rotor bearing 10a is minimized, such that the sliprings 12a and 12b are additionally protected against penetration of dust and water.

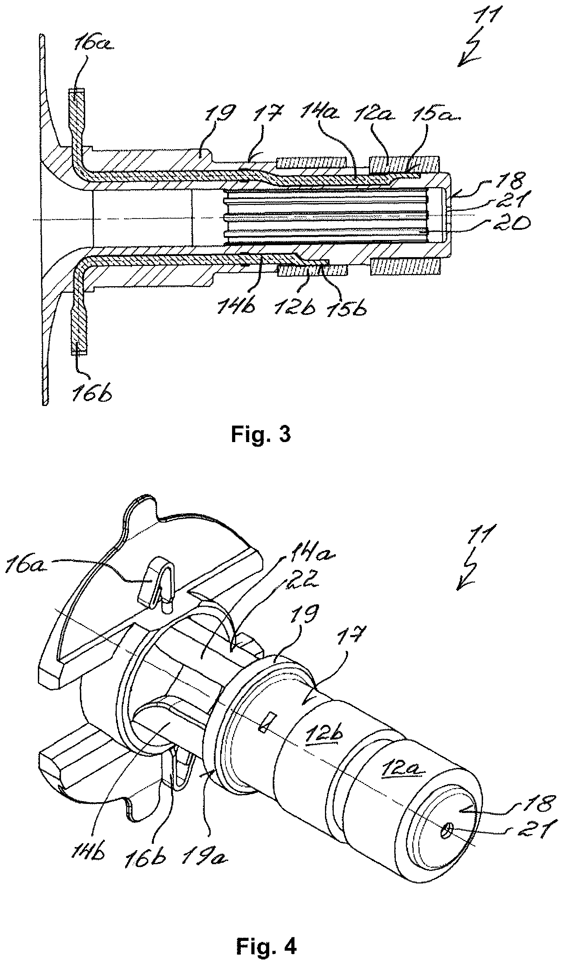

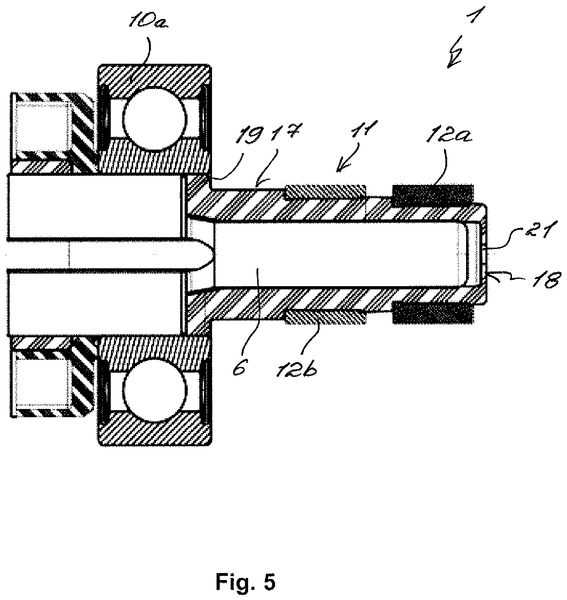

Fig. 3 shows a sectional view, and Fig. 4 shows a view of the slipring arrangement 11 in the electric generator 1 according to the invention. Visible in Fig. 3 are form-fitting or press-fitting elements 20, by which the slipring arrangement 11 is fixed in a form-fitting or in a press-fitting and rotationally fixed manner to the shaft 6. In Fig. 4 the protective ring projection 19 has a bigger outer diameter 19a than an arrangement 22 of the sheathed electrical conductors 14a and 14b under the rotor bearing 10a. As shown in Fig. 5, the rotor bearing 10a can then be pressed on the protective ring projection 19 and the sliprings 12a and 12b are better protected. The rotor bearing 10a is fixed in Fig. 5 on the protective ring projection 19 of the slipring arrangement 11 and the axially gap between the sheathing region 17 and the rotor bearing 10a is closed. On this way, the slipring arrangement 11 is better protected and dust and water are prevented from penetrating to the sliprings 12a and 12b.

Overall, in the electric generator 1 according to the invention, dust and water can advantageously be prevented from penetrating to the sliprings 12a and 12b. In comparison with a conventional electric generator, no further measures for protecting the sliprings 12a and 12b are necessary, with the result that the costs and the amount of production work can be reduced considerably.

## Claims

1. Electric generator (1), in particular an alternator in a motor vehicle, having a rotor (2) and a stator (3),
- wherein the rotor (2) contains at least two claw poles (4, 5), which are fixed on the shaft (6),
- wherein the claw poles (4, 5) contains a plurality of claw pole teeth (4a, 5a), which form an outer circumference (7) of the rotor (2),
- wherein at least one excitation coil (8) is arranged between the claw poles (4, 5) and generates a magnetic field that alternates on the claw pole teeth (4a, 5a) on the outer circumference (7) of the rotor (2),
- wherein a slipring arrangement (11) contains a sheathing region (17), which sheaths the shaft (6) in a form-fitting or in a press-fitting manner and extends axially, at least in regions,
- wherein the slipring arrangement (11) contains two sliprings (12a, 12b), which are arranged, at a distance from the rotor (2), on the sheathing region (17) and go around the shaft (6), and
- wherein the slipring arrangement (11) having two electrical conductors (14a, 14b), which are sheathed, at least in regions, by the sheathing region (17) and via which the sliprings (12a, 12b) are electrically contacted to the excitation coil (8),
**characterized in that**
- the slipring arrangement (11) has at least one protective ring projection (19), which is realized integrally on the sheathing region (17) and which goes around the shaft (6) between the rotor (2) and the sliprings (12a, 12b), and
- a rotor bearing (10a) is fixed in a form-fitting or in a press-fitting manner on the protective ring projection (19), at least in regions.

2. Electric generator according to Claim 1,
**characterized in that**,
the protective ring projection (19) has a larger outer diameter than an arrangement of the sheathed electrical conductors (14a, 14b) under the rotor bearing (10a).

3. Electric generator according to Claim 2,
**characterized in that**,
the rotor bearing (10a) is pressed on the protective ring projection (19), at least in regions.

4. Electric generator according to any one of the preceding claims,
**characterized in that**
the sheathing region (17) transitions into a radially extending end protection region (18), which encompasses a shaft end (13) of the shaft (6) arranged opposite to the rotor (2).

5. Electric generator according to Claim 4,
**characterized in that**
the end protection region (18) encompasses the shaft end (13) in a form-fitting manner.

6. Electric generator according to any one of the preceding claims,
**characterized in that**
the end protection region (18) has an axial opening and/or that the shaft (6) is a hollow shaft.

7. Electric generator according to any one of the preceding claims,
**characterized in that**
the sheathing region (17) and/or the at least one protective ring projection (19) of the slipring arrangement (11) are composed of an electrically insulating material, especially a plastic material.

8. Electric generator according to Claim 7,
**characterized in that**
the respective electrical conductors (14a, 14b) are insulated from the shaft (6) by the electrically insulating material of the sheathing region (17) .

9. Electric generator according to any one of the preceding claims,
**characterized in that**
the sliprings (12a, 12b) are fixed in a form-fitting manner or in a press-fitting manner only on the sheathing region (17) of the slipring arrangement (11).

10. Electric generator according to claim 9,
**characterized in that**
- an outer diameter of the sheathing region (17) at the respective slipring (12a, 12b) corresponds to an inner diameter of the respective slipring (12a, 12b), and
- the outer diameter of the sheathing region (17) at the one slipring (12a, 12b) differs from the outer diameter of the sheathing region (17) at the other slipring (12a, 12b), so that the respective slipsrings (12a, 12b) can be mounted on the sheathing region (17) one after another.

11. Electric generator according to any one of the preceding claims,
**characterized in that**
- form-fitting or press-fitting elements (20) are formed on the shaft (6) and/or on the inner surface of the sheathing region (17), and
- the slipring arrangement (11) is fixed to the shaft (6) in the sheathing region (17) in a form-fitting or in a press-fitting manner via the form-fitting or press-fitting elements (20).

12. Electric generator according to one of the preceding claims,
**characterized in that**
- the respective electrical conductor (14a, 14b) extends along the shaft (6) from the respective slipring (12a, 12b) to the claw poles (4, 5), and
- at the claw poles (4, 5), the respective electrical conductor (14a, 14b) projects radially from the shaft (6) and forms an electrical contact element (16a, 16b), which is electrically connected to the excitation coil (8).

13. Electric generator according to claim 12,
**characterized in that**
at the claw poles (4, 5), the sheathing region (17) projects radially from the shaft (6) with an axial distance to the electrical contact element (18a, 18b) and forms an insulating collar between the claw poles (4, 5) and the electrical contact element (16a, 16b).
